# EUROPÄISCHE PATENTANMELDUNG

(11) **EP 2 253 403 A1**
(43) Veröffentlichungstag der Anmeldung: **24.11.2010**
(21) Anmeldenummer: 10163080.4
(22) Anmeldetag: 18.05.2010
(51) Int. Cl.: B23D 47/04

(54) **Plattensäge mit Spannbacke**

(30) Priorität: 18.05.2009 DE 202009007150 U; 18.05.2010 WO PCT/EP2010/056831
(71) Anmelder: Wilhelm Altendorf GmbH & Co. KG, 32429 Minden (DE)
(72) Erfinder: Altendorf, Wilfried, 32429, Minden (DE)
(74) Vertreter: Eisenführ, Speiser & Partner

(57) **Zusammenfassung**

Die Erfindung betrifft eine Plattensäge, umfassend eine Werkstückauflagefläche (20a-e) mit einem darin angeordneten Sägeschlitz (10), ein Sägeaggregat, welches entlang des Sägeschlitzes (10) horizontal verfahrbar ist und ein drehbar gelagertes Kreissägeblatt umfasst, dessen Drehachse unterhalb der Werkstückauflagefläche angeordnet ist, und zumindest ein Werkstückspannelement (80a-c), das an einen Vorschubschlitten (60a-c) angeordnet ist, der in der Ebene der Werkstückauflagefläche verschiebbar ist. Das Werkstückspannelement weist eine bewegliche Spannbacke (80a-c) auf, die in einer ersten Position unterhalb der Werkstückauflagefläche angeordnet ist, in einer zweiten Position über die Werkstückauflagefläche hinausragt, an der eine Fläche (81c) so ausgebildet ist, dass sie in der zweiten Position als erste Anschlagfläche (81c) für ein Werkstück dient, das aus einer ersten Richtung, weiche parallel zur Werkstückauflagefläche ausgerichtet ist, gegen die Spannbacke geschoben wird, und die so mit einem Aktuator gekoppelt ist, dass der Aktuator auf die Spannbacke eine Kraft ausübt, welche die Spannbacke aus der zweiten in Richtung zu der ersten Position bewegt und hierbei ein Werkstück durch eine an der Spannbacke ausgebildete Spannfläche in Richtung der Werkstückauflagefläche spannt.

## Beschreibung

Die Erfindung betrifft eine Plattensäge, umfassend eine Werkstückauflagefläche mit einem darin angeordneten Sägeschlitz, ein Sägeaggregat, welches entlang des Sägeschlitzes horizontal verfahrbar ist und ein drehbar gelagertes Kreissägeblatt umfasst, dessen Drehachse unterhalb der Werkstückauflagefläche angeordnet ist, und zumindest ein Werkstückspannelement, das an einen Vorschubschlitten angeordnet ist, der in der Ebene der Werkstückauflagefläche verschiebbar ist.

Solche Plattensägen werden dazu verwendet, um großformatige Platten, insbesondere Platten aus Holzwerkstoff oder Massivholz, Kunststoffplatten oder Platten aus Leichtmetallen zuzuschneiden. Plattensägen des erfindungsgemäßen Typs weisen eine horizontale Werkstückauflagefläche auf, auf die das Werkstück vom Benutzer oder einer automatischen Zuführeinrichtung aufgelegt werden kann. Auf der Werkstückauflagefläche kann das Werkstück, insbesondere mittels eines Luftkissens oder sonstiger Lagerungseinrichtungen unterstützt, horizontal verschoben werden, um in definierter Weise in Bezug auf das Sägeaggregat und dessen Bewegungsrichtung positioniert zu werden. Das Sägeaggregat ist bei Plattensägen des erfindungsgemäßen Typs unterhalb der Werkstückauflagefiäche angeordnet. Ein Umfangsabschnitt des Sägeblatts wird zur Durchführung des Schnitts von unten durch den Sägeschlitz nach oben hindurchgeführt und dann kann durch Bewegung des Sägeaggregats entlang des Sägeschlitzes das Werkstück zugeschnitten werden.

Aus EP1990119A1 ist eine Plattensäge des eingangs genannten Typs bekannt. Die Plattensäge zeichnet sich dadurch aus, dass sie eine seitlich an der Werkstückauflagefläche angeordnete Anlagekante aufweist, mittels derer das Werkstück in definierter Weise in Bezug auf den Sägeschlitz bzw. die Bewegungsrichtung des Sägeaggregats positioniert werden kann. Die bekannte Plattensäge weist weiterhin Fixier- und Vorschubschlitten auf, welche mit Spannelementen ausgerüstet sind, um die zu formatierende Werkstückplatte spannen und durch Bewegen der Fixier - und/oder Vvrschubschütten in definierter Weise positionieren zu können.

Grundsätzlich kann mit Plattensägen der eingangs genannten Art ein zeitlich effizienter Zuschnitt von großformatigen Werkstücken durchgeführt werden. Es ist jedoch wünschenswert, dass solche Plattensägen dahingehend weiterentwickelt werden, dass Werkstücke in vielfältigen Abmessungen und aus Platten vielfältiger Größe zugeschnitten werden können. Zudem soll hierbei ein möglichst effizienter Arbeitsablauf bereitgestellt wird.

Der Erfindung liegt die Aufgabe zugrunde, eine Plattensäge in solcher Weise fortzuentwickeln, dass diese effiziente Arbeitsweise mit Werkstückplatten von variablen Abmessungen, insbesondere auch sehr kleinen Abmessungen möglich wird.

Diese Aufgabe wird erfindungsgemäß gelöst, in dem das Werkstückspannelement eine bewegliche Spannbacke aufweist,
- die in einer ersten Position unterhalb der Werkstückauflagefläche angeordnet ist,
- in einer zweiten Position über die Werkstückauflagefläche hinausragt,
- an der eine Fläche so ausgebildet ist, dass sie in der zweiten Position als erste Anschlagfläche für ein Werkstück dient, das aus einer ersten Richtung, welche parallel zur Werkstückauflagefläche ausgerichtet ist, gegen die Spannbacke geschoben wird, und
- die so mit einem Aktuator gekoppelt ist, dass der Aktuator auf die Spannbacke eine Kraft ausübt, welche die Spannbacke aus der zweiten in Richtung zu der ersten Position bewegt und hierbei ein Werkstück durch eine an der Spannbacke ausgebildete Spannfläche in Richtung der Werkstückauflagefläche, insbesondere gegen die Werkstückauflagefiläche spannt.

Mit der erfindungsgemäßen Plattensäge wird es möglich, das Werkstück an einer Fläche der Spannbacke auszurichten und hierdurch in eine bestimmte und definierte Position zu bringen. Die Anschlagfläche an der Spannbacke ist lediglich in der zweiten Position, in der die Spannbacke über die Werkstückauflagefläche hinausragt, nutzbar und in der ersten Position, in der die Spannbacke unter die Werkstückauflagefläche abgesenkt ist oder zumindest mit dieser fluchtend ist, steht die Anschlagfläche einer Verschiebung des Werkstücks auf der Werkstückauflagefläche nicht im Weg. Durch diese spezifische Art der Bereitstellung einer Anschlagfläche kann in besonders effizienter Weise die Positionierung, Zustellung und der Zuschnitt von Werkstücken durchgeführt werden, indem es einerseits möglich ist, das Werkstück an einer Anschlagfläche an der Spannbacke definiert zu positionieren, hierauf folgend durch Absenken der Spannbacke in die erste Position eine Verschiebung des Werkstücks über die abgesenkte Spannbacke zu ermöglichen oder das Werkstück durch Absenken der Spannbacke in Richtung der ersten Position das Werkstück mit der Spannbacke zu spannen und hierauf folgend das Werkstück in gespannter Weise zu verschieben und hierdurch ein definiertes Schnittmaß einzustellen.

Die Anschlagfläche kann an der Spannbacke insbesondere solcher Art angeordnet sein, dass ein Werkstück, welches an dieser Anschlagfläche anliegt, durch Bewegen der Spannbacke von der ersten in Richtung der zweiten Position unmittelbar gespannt werden kann, ohne dass hierzu eine Horizontalverschiebung des Werkstücks oder der Spannbacke aus der Anschlagposition heraus erforderlich wäre.

Als Anschlagfläche ist erfindungsgemäß eine Fläche zu verstehen, die solcher Art ausgerichtet ist, dass sie Werkstücke beliebiger Stärke in ein und derselben Position referenziert. Eine solche Anschlagfläche steht vorzugsweise senkrecht zur Werkstückauflagefläche oder weist zumindest einen oder mehrere senkrecht stehende Bereiche auf, die in Flucht zueinander liegen, Um Werkstücke mit empfindlichen oder fragilen Seitenkanten definiert an die Anschlagfläche anlegen zu können, ohne hierbei eine Beschädigung oder ungenaue Positionierung zu verursachen, ist es bevorzugt, wenn eine flächige Anlage zwischen der Werkstückkante und der Anschlagfläche hergestellt wird. In bestimmten Anwendungsformen kann die Anschlagfläche aber auch so ausgebildet sein, dass sie einen linienförmigen Anschlagbereich mit der Werkstückkante ausbildet oder gar einen näherungsweise punktförmigen Anschlagbereich.

Der erfindungsgemäß vorgesehene, mit der Spannbacke gekoppelte Aktuator kann vorzugsweise ein elektromagnetisch, elektromotorisch, pneumatisch oder hydraulisch betätigter Aktuator sein, der eine zum sicheren Spannen des Werkstücks ausreichende Spannkraft ausbildet, Der Aktuator dient vorzugsweise auch dazu, um die Spannbacke von der ersten in die zweite Position und umgekehrt zu bewegen und hierdurch die Spannbacke in die über die Werkstückauflageffäche hinausragende Position für eine Anschlagpositionierung oder in die abgesenkte, unterhalb oder in Flucht zur Werkstückauflagefläche liegende Position für eine beschädigungsfreie Verschiebung des Werkstücks auf der Werkstückauflagefläche zu bringen.

Dabei ist unter einem Spannen gegen die Werkstückauflagefläche zu verstehen, dass das Werkstück gegen eine die Werkstückauflagefläche bildende Oberfläche als Gegenfläche gespannt wird. Diese Gegenfläche kann beispielsweise feststehend an der Plattensäge ausgebildet sein oder kann beweglich sein, um das gespannte Werkstück noch bewegen zu können, beispielsweise durch Verfahren der Spannbacke mit dem damit gespannten Werkstück. So kann die Gegenfläche beispielsweise an dem Fixierschlitten ausgebildet sein, an dem die Spannbacke angeordnet ist, sodass das Werkstück in der gespannten Lage mitsamt dem Fixierschlitten verfahren werden kann, indem der Fixierschlitten verfahren wird.

Gemäß einer ersten bevorzugten Ausführungsform ist an der Spannbacke eine zweite Fläche ausgebildet, welche als Spannfläche für ein Werkstück dient und solcherart an der Spannbacke angeordnet ist, dass ein Werkstück zwischen der Spannfläche und der Werkstückauflagefläche eingespannt werden kann, wenn der Aktuator die Spannbacke aus der zweiten Position in Richtung der ersten Position bewegt. Mit dieser Ausgestaltung wird es möglich, ein Werkstück an der Spannbacke in definierter Weise anzulegen und zu gleich eine hierauf folgende Einspannung des Werkstücks in dieser definierten Lage mittels der Spannbacke zu erzielen, was für einen effizienten Arbeitsablauf von großem Vorteil ist. Die Spannfläche liegt dabei vorzugsweise solcher Art, dass sie einen der Werkstückauflagefläche gegenüberliegenden Bereich aufweist, der auf die obere Oberfläche des Werkstücks aufgelegt wird und dann die untere Oberfläche des Werkstücks auf die Werkstückauflage presst und hier durch den Einspannvorgang verursacht. Insbesondere kann die Spannfläche eine abgerundete Form aufweisen, um eine oberflächenschonende Spannwirkung für Werkstücke unterschiedlicher Materialstärke zu bewirken, was insbesondere dann vorteilhaft ist, wenn die Spannbacke als Schwenkhebel oder in anderer Weise schwenkbar gelagert ist, um die Bewegung aus der ersten in die zweite Position und umgekehrt zu bewirken.

Noch weiter ist es bevorzugt, dass an der Spannbacke eine dritte Fläche so angeordnet ist, dass sie als zweite Anschlagfläche für ein Werkstück dient, das aus einer zweiten Richtung gegen die Spannbacke geschoben wird, welche parallel zur Werkstückauflagefläche und vorzugsweise um 180° gegenüber der ersten Richtung geschwenkt ausgerichtet ist. Mit dieser Fortbildung werden an der Spannbacke zwei Anschlagflächen bereitgestellt, die solcher Art angeordnet sind, dass ein Werkstück aus zwei Richtungen an der Spannbacke in definierter Weise angelegt werden kann. Auf dieser Weise wird es möglich, die Spannbacke in einer universellen Weise als Referenzpunkt zur definierten Positionierung eines Werkstücks zu nutzen. Insbesondere kann mit dieser Ausgestaltung auch ermöglicht werden Werkstücke mit großer Abmessung auf der mittels der ersten Anschlagfläche zu positionieren und Werkstücke mit kleiner Abmessung mittels der zweiten Anschlagfläche zu positionieren.

Noch weiter ist es bevorzugt, dass die erste Anschlagfläche parallel und beabstandet zur zweiten Anschlagfläche liegt. Durch diese Ausgestaltung wird eine Anschlagbewegung entlang einer übereinstimmenden Richtungsachse an den zwei Anschlagflächen ermöglicht. Die Richtungsachse liegt dabei vorzugsweise parallel zur Rotationsachse des Kreissägeblatts, so dass die beiden Anschlagflächen parallel zur Kreissägeblattebene liegen und hierdurch ein Anschlag in der Zustellrichtung des Werkstücks bereitgestellt wird.

Weiterhin ist es bevorzugt, dass an dem Vorschubschlitten zumindest ein, vorzugsweise mehrere Vakuumspannelemente angeordnet sind, welche so angeordnet sind, dass sie ein auf der Werkstückauflagefläche aufliegendes Werkstück spannen können. Solche Vakuumspannelemente können insbesondere durch ein Ventil aktiviert werden, das durch einen Stift betätigt wird, der bei Aufliegen eines Werkstücks auf dem Vakuumspannelement eingedrückt wird. Das Werkstück wird in diesem Fall durch das Vakuumspannelement am Vorschubschlitten vakuumgespannt, was eine flankierende Fixierung des Werkstücks in Bezug auf den Vorschubschlitten ermöglicht und hierdurch ein ungewolltes Verrutschen des Werkstücks bei der Zustellbewegung oder der Ausführung des Sägeschnittes verhindern kann. Insbesondere kann der Vorschubschlitten als längliche Vorschubschlittenleiste ausgeführt sein, entlang derer sich mehrere Vakuumspannelemente befinden.

Besonders bevorzugt ist es, dass der Vorschubschlitten in einer Richtung verfahrbar ist, die senkrecht zum Sägeschlitz liegt. Hierbei ist zu verstehen, dass der Vorschubschlitten weiter vorzugsweise in einer Richtung verfahrbar ist, die parallel zur Werkstückauflagefläche liegt, so dass mit dem Vorschubschlitten eine Zustellbewegung eines daran gespannten Werkstücks senkrecht zur Kreissägeblattebene erfolgen kann und hierdurch ein gewünschtes Schnittmaß eingestellt werden kann.

Die erfindungsgemäße Plattensäge kann weiter fortgebildet werden durch mehrere Vorschubschlitten, die jeweils eine Spannbacke der zuvor beschriebenen Bauweise aufweisen und unabhängig voneinander verfahrbar sind. Mit dieser Ausgestaltung wird es möglich, ein Werkstück an den Anschlagflächen mehrerer Spannbacken auszurichten. Hierbei ist zu verstehen, dass die mehreren Vorschubschlitten mittels eines Aktuators verschoben werden können und auf diese Weise die Anschlagflächen der jeweiligen Spannbacken an den Vorschubschlitten in vordefinierte Positionen gebracht werden können. Hierdurch kann dann ein bestimmter Winkel in Bezug auf den Sägeschlitz eingestellt werden, wenn ein Werkstück an den Anschlagflächen der Spannbacken angelegt wird. Dabei ist es insbesondere bevorzugt, dass die Anschlagfläche schwenkbar an der Spannbacke ausgebildet ist, um eine flächige Anlage an der Werkstückkante bei jedem Winkel zu ermöglichen.

Alternativ hierzu kann in einer weiteren bevorzugten Ausführungsform vorgesehen sein, dass mehrere Vorschubschlitten (60a-c), die jeweils zumindest eine Spannbacke (80a-c) aufweisen, insbesondere eine Spannbacke in ihrem vorderen, zum Sägeschlitz weisenden Endbereich und/oder in ihrem hinteren, vom Sägeschlitz wegweisenden Endbereich, wobei die Vorschubschlitten vorzugsweise solcherart miteinander gekoppelt sind, dass sie gemeinsam verfahrbar sind , bereitgestellt sind. Mit dieser Ausgestaltung kann einerseits durch die Anschlagflächen an den Spannbacken eine Anschlaglinie definiert werden, an der das Werkstück wie an einer Anschlagkante positioniert werden kann. Durch die Anordnung von Spannbacken in dem zum Sägeschlitz weisenden Endbereich der Vorschubschlitten können schmale Werkstückabschnitte noch gut gespannt und bearbeitet werden. Die Spannbacken an dem vom Sägeschlitz wegweisenden Ende dienen hingegen der Einspannung von großformatigen Werkstücken und ermöglichen es, die Dimensionierung der Plattensäge vollständig für die Werkstückgröße auszunutzen. Die Vorschubschlitten können bei dieser Ausgestaltung unmittelbar mechanisch miteinander gekoppelt sein oder es kann eine steuerungstechnische Kopplung bereitgestellt sein, welche die Aktuatoren der mehreren Vorschubschlitten in synchroner Weise ansteuert und hierdurch eine gekoppelte Synchronbewegung der Vorschubschlitten bewirkt. Insbesondere in letzterem Fall kann die steuerungstechnische Kopplung auch aufgehoben werden und die Vorschubschlitten unabhängig voneinander verfahren werden, um hierdurch die Vorteile der zuvor erläuterten bevorzugten Ausführungsform bereitzustellen.

Weiterhin ist es bevorzugt, dass eine, vorzugsweise alle Spannbacken gegen eine Fläche spannen, die an dem jeweiligen Vorschubschlitten, an dem die Spannbacke angeordnet ist, ausgebildet ist. Mit dieser Fortbildung wird erreicht, dass ein gespanntes Werkstück gemeinsam mit dem oder den Vorschubschlitten bewegt werden kann, an dem die das Werkstück spannenden Spannbacken angeordnet sind. Dies ist insbesondere vorteilhaft, wenn die Vorschubschlitten mittels eines oder mehreren Aktuatoren verschoben werden und ermöglicht dann eine maßgenaue Positionierung des gespannten Werkstücks.

Bei den Ausführungsformen mit mehreren Vorschubschlitten ist es weiter bevorzugt, dass die Vorschubschlitten parallel und beabstandet zueinander liegen. Mit einer solchen Ausrichtung der Vorschubschlitten wird einerseits eine Zustellbewegung erzielt, die für eine Vielzahl von Anforderungen an auszuführende Sägeschnitte vorteilhaft ist. Darüber hinaus wird eine zuverlässige und rechnerisch für den Bediener nachvollziehbare Verfahrbewegung des Werkstücks mittels der Vorschubschlitten erzielt.

Gemäß einer weiteren bevorzugten Ausführungsform ist vorgesehen, dass der/die Vorschubschlitten mit zumindest einem Schlittenaktuator zur Bewegung des/der Vorschubschlitten(s) gekoppelt ist/sind und die Spannbacken mit zumindest einem Backenaktuator zur Bewegung des/der Spannbacke(n) gekoppelt ist/sind. Diese Ausgestaltung ist weiterhin gekennzeichnet durch einen Sensor im Bereich des Sägeschlitzes, der ausgebildet ist, um das Vorhandensein eines Werkstücks in einem Bereich oberhalb des Sägeschlitzes zu detektieren, und eine Maschinensteuerung, die mit dem Sägeaggregat, dem Schlittenaktuator, dem Backenaktuator und dem Sensor signaltechnisch gekoppelt und die ausgebildet ist, um den Backenaktuator zum Spannen eines Werkstücks anzusteuern, den Vorschubschütten bei gespanntem Werkstück solange in Richtung auf den Sägeschlitz zuzubewegen, bis der Sensor das Vorhandensein des Werkstücks im Bereich oberhalb des Sägeschlitzes detektiert, und hierauf folgend das Sägeaggregat zur Durchführung eines Besäumschnittes anzusteuern.

Diese Fortbildungsform ermöglicht eine vorteilhafte automatisierte Detektion einer Werkstückkante, die mittels eines Besäumschnittes zugeschnitten werden muss. Unter einem Besäumschnitt ist hierbei ein Schnitt zu verstehen, bei dem entlang einer unsauberen oder undefinierten Werkstückkante ein schmaler Streifen Material durch einen Sägeschnitt abgetrennt wird und hierdurch eine definierte und saubere Werkstückkante erzeugt wird. Ein Besäumschnitt dient typischerweise dazu, um eine zu formatierende großformatige Werkstückplatte entlang einer Kante auf ein bestimmtes Maß zu definieren und dann ausgehend von dieser definierten Kante weitere, hierzu parallel oder unter einem Winkel stehende Sägeschnitte auszuführen. Diese weiteren Sägeschnitte erfolgen dann in einem exakten und durch die Plattensäge eindeutig bestimmbaren Maß und Winkel zu der mittels des Besäumschnittes hergestellten Kante. Die erfindungsgemäße Maschinensteuerung arbeitet mit einem Sensor, wie beispielsweise einer Lichtschranke, zusammen, die ein Werkstück oberhalb des Sägeschlitzes detektieren kann.

Erfindungsgemäß kann hierzu mit einem einzigen Sensor oder mit mehreren Sensoren, die entlang des Sägeschlitzes verteilt sind, das Vorhandensein des Werkstücks detektiert werden, beispielsweise um mittels mehrerer Sensoren sicherzustellen, dass das Werkstück entlang eines bestimmten Bereichs des Sägeschlitzes oberhalb des Sägeschlitzes liegt. Um das Werkstück in eine solche definierte, von den Sensoren detektierte Lage zu bringen, wird es zunächst durch die Spannbacken der Vorschubschlitten oder in anderer Weise gespannt und dann durch Bewegen der Vorschubschlitten auf den Sägeschlitz zubewegt. Diese Vorschubbewegung wird erst gestoppt, wenn das Werkstück oberhalb des Sägeschlitzes liegt. Hierauf folgend kann dann durch Bewegen des Sägeaggregats entlang des Sägeschlitzes der Besäumschnitt ausgeführt werden.

Dabei ist es besonders bevorzugt, wenn die Maschinensteuerung ausgebildet ist, um den Vorschubschlitten bei gespanntem Werkstück nachdem der Sensor das Vorhandensein des Werkstücks im Bereich oberhalb des Sägeschlitzes detektiert hat, um eine vorbestimmte, vorzugsweise über eine Benutzerschnittstelle eingebbare Distanz in Richtung auf den Sägeschlitz zuzubewegen und hierauf folgend das Sägeaggregat zur Durchführung des Besäumschnittes anzusteuern. Mit dieser Fortbildung der Maschinensteuerung wird sichergestellt, dass das Kreissägeblatt während des Besäumschnittes einen Materialstreifen einer bestimmten Mindestbreite abtrennt und somit nicht zu nahe an einer Werkstückkante entlangläuft oder gar teilweise aus dem Werkstück seitlich heraustritt, was zu einem unsauberen Besäumschnitt führen kann, Das Maß, um welches die Vorschubschlitten zugestellt werden, nachdem das Werkstück oberhalb des Sägeschnittes detektiert wurde, kann festgesetzt sein oder kann vom Benutzer programmierbar sein, beispielsweise in Abhängigkeit der verarbeiteten Materialien oder der Stärke der verarbeiteten Materialien oder der Größe des Sägeschlitzes, um eine Zustellbewegung auszuführen, die einen ausreichend großen Streifen abtrennt, der nicht in den Sägeschlitz fallen kann. Insbesondere kann die Maschinensteuerung dazu ausgebildet sein, um aus zuvor eingegebenen Werkstückkennwerten, beispielsweise der Materialart und/oder der Stärke des Werkstücks die für einen sauberen Besäumschnitt erforderliche Zustellbewegung zu berechnen und entsprechend auszuführen.

Noch weiter ist es bevorzugt, dass die Maschinensteuerung ausgebildet ist, um den Backenaktuator zum Spannen eines Werkstücks anzusteuern, den Vorschubschlitten bei gespanntem Werkstück solange in Richtung von dem Sägeschlitz wegzubewegen, solange der Sensor das Vorhandensein des Werkstücks im Bereich oberhalb des Sägeschlitzes detektiert, hierauf folgend vorzugsweise den Vorschubschlitten bei gespanntem Werkstück solange in Richtung auf den Sägeschlitz zuzubewegen, bis der Sensor das Vorhandensein des Werkstücks im Bereich oberhalb des Sägeschlitzes detektiert, hierauf folgend den Vorschubschlitten bei gespanntem Werkstück, nachdem der Sensor das Vorhandensein des Werkstücks im Bereich oberhalb des Sägeschlitzes detektiert hat, um eine vorbestimmte, vorzugsweise über eine Benutzerschnittstelle eingebbare Distanz in Richtung auf den Sägeschlitz zuzubewegen, und hierauf folgend das Sägeaggregat zur Durchführung eines Besäumschnittes anzusteuern.

Während es bei den zuvor erläuterten Ausführungsformen zur Detektion der zu besäumenden Kante erforderlich ist, dass das Werkstück solcherart aufgelegt wird, dass es nicht den Sägeschlitz überdeckt und das Werkstück dann nachfolgend an den Sägeschlitz heranzuführen, kann bei der letztgenannten bevorzugten Ausführungsform das Werkstück in beliebiger Weise auf die Werkstückauflagefläche aufgelegt und von den Fixierschlitten gespannt werden, unabhängig davon, ob es hierbei den Sägeschlitz bereits überdeckt oder nicht. Die Maschinensteuerung ist dann in der Lage, das Werkstück je nach Signal des Sensors im Bereich des Sägeschlitzes so zu verfahren, dass die zu besäumende Kante erfasst wird, indem das Werkstück gegebenenfalls zunächst durch entsprechendes Wegbewegen der Vorschubschlitten vom Sägeschlitz aus dem Bereich oberhalb des Sägeschlitzes entfernt wird, hierauf folgend wieder so weit zugestellt wird, dass eine für den Besäumschnitt erforderliche Überlappung über den Sägeschlitz eintritt und dann hierauf folgend der Besäumschnitt durchgeführt werden kann.

Schließlich kann gemäß einer weiteren bevorzugten Ausführungsform der Maschinensteuerung zur Ausführung des Besäumschnittes vorgesehen sein, dass die Maschinensteuerung ausgebildet ist, um den Backenaktuator zum Spannen eines Werkstücks anzusteuern, den Schlittenaktuator bei gespanntem Werkstück solange in Richtung von dem Sägeschlitz wegzubewegen, solange der Sensor das Vorhandensein des Werkstücks im Bereich oberhalb des Sägeschlitzes detektiert, hierauf folgend den Schüttenaktuator bei gespanntem Werkstück nachdem der Sensor das Vorhandensein des Werkstücks im Bereich oberhalb des Sägeschlitzes nicht mehr detektiert hat, um eine vorbestimmte, vorzugsweise über eine Benutzerschnittstelle eingebbare Distanz in Richtung auf den Sägeschlitz zuzubewegen, und hierauf folgend das Sägeaggregat zur Durchführung eines Besäumschnittes anzusteuern. Bei dieser Ausgestaltung wird das Werkstück, wenn es nach Auflegen oberhalb des Sägeschlitzes liegt, zunächst mittels der Vorschubschlitten solange verschoben, bis es gerade nicht mehr oberhalb des Sägeschlitzes liegt und hierauf folgend um ein vorbestimmtes, gegebenenfalls vom Benutzer wählbares oder von der Maschinensteuerung automatisch eingestelltes Maß wieder zurückbewegt, um hierdurch eine für die Ausführung eines sauberen Besäumschnittes ausreichende Überlappung des Sägeschlitzes herzustellen.

Die erfindungsgemäße Plattensäge kann weiterhin dadurch fortgebildet werden, dass der/die Fixierschlitten mit zumindest einem Schlittenaktuator zur Bewegung des/der Vorschubschlitten(s) gekoppelt ist/sind, die Spannbacken mit zumindest einem Backenaktuator zur Bewegung des/der Spannbacke(n) gekoppelt ist/sind, wobei weiterhin vorgesehen ist eine Maschinensteuerung, die mit dem Schlittenaktuator, dem Backenaktuator und dem Sensor signaltechnisch verbunden ist und die ausgebildet ist, um a) den Backenaktuator zum Spannen eines Werkstücks anzusteuern, b) den Schlittenaktuator zum Bewegen des Vorschubschlittens bei gespanntem Werkstück um ein über eine Benutzerschnittstelle eingebbares Schnittmaß zu bewegen, c) hierauf folgend das Sägeaggregat zur Durchführung eines Formatierungsschnittes anzusteuern, und d) hierauf folgend die Schritte b) und c) gegebenfalls zu wiederholen, wobei der Vorschubschlitten um das gleiche oder um ein anderes Schnittmaß bewegt wird.

Mit dieser bevorzugten Ausführungsform wird es möglich, einen oder mehrere Schnitte an einem Werkstück vorzunehmen, die jeweils in einem durch die Bewegung der Vorschubschlitten eingestellten, definierten Schnittmaß ausgeführt werden und hierdurch eine großformatige Werkstückplatte in mehrere Streifen definierter Breite zuzuschneiden. Besonders vorteilhaft an dieser Fortbildungsform ist, dass der Bediener die Breite und Anzahl der Streifen über eine Benutzerschnittstelle zuvor einprogrammieren kann und die Plattensäge hierauf folgend die hierfür erforderlichen Sägeschnitte automatisiert und ohne weiteren Eingriff des Benutzers ausführen kann. Dabei ist zu verstehen, dass gegebenenfalls vor Durchführung des ersten Schnittes zur Herstellung der Streifen ein Besäumschnitt gemäß der zuvor beschriebenen Weise ausgeführt wird, um eine definierte Referenzkante an dem Werkstück herzustellen.

Ein weiterer Aspekt der Erfindung ist ein Fixiertisch für eine Plattensäge mit a) einer Werkstückauflagefläche, b) Kopplungsmitteln zum Befestigen des Fixiertisches an einer Plattensäge solcherart, dass die Werkstückauflagefläche des Fixiertisches fluchtend zu einer Werkstückauflagefläche der Plattensäge liegt, c) zumindest einem Werkstückspannelement, das an einen Vorschubschlitten angeordnet ist, der in der Ebene der Werkstückauflagefläche verschiebbar ist. Der Fixiertisch ist erfindungsgemäß dadurch fortgebildet, dass das Werkstückspannelement eine bewegliche Spannbacke aufweist, die die in einer ersten Position unterhalb der Werkstückauflagefläche angeordnet ist, in einer zweiten Position über die Werkstückauflagefläche hinausragt, an der eine Fläche so ausgebildet ist, dass sie in der zweiten Position als erste Anschlagfläche für ein Werkstück dient, das aus einer ersten Richtung, welche parallel zur Werkstückauflagefläche ausgerichtet ist, gegen die Spannbacke geschoben wird, und die so mit einem Aktuator gekoppelt ist, dass der Aktuator auf die Spannbacke eine Kraft ausübt, welche die Spannbacke aus der zweiten in Richtung zu der ersten Position bewegt und hierbei ein Werkstück durch die Spannbacke spannt.

Ein solcher Fixiertisch eignet sich insbesondere dazu, um in Verbindung mit einer Plattensäge verwendet zu werden, indem der Fixiertisch neben einem Werkstückauflagebereich angeordnet wird, in dem ein Sägeschlitz mit einem darunter angeordneten Kreissägeaggregat ausgebildet ist. Der erfindungsgemäße Fixiertisch zeichnet sich durch Spannbacken aus, die sowohl zum Spannen als auch als Anschlagfläche dienen können. Auf die Beschreibung der Vorzüge und der Arbeitsweise dieser Spannbacken des Fixiertisches wird Bezug genommen auf die zuvor gegebenen Erläuterungen zu der Plattensäge mit entsprechend ausgebildeten Spannbacken.

Der erfindungsgemäße Fixiertisch eignet sich neben dem Einsatz in Plattensägen insbesondere auch dafür, an anderen Werkzeugmaschinen, wie beispielsweise Formatkreissägen mit ortsfest rotierendem Kreissägeblatt, Bearbeitungszentren mit anderen Schnittwerkzeugen, wie beispielsweise Fräswerkzeugen oder Hobelwerkzeugen und dgl. verwendet zu werden.

Der erfindungsgemäße Fixiertisch kann insbesondere in solcher Weise fortgebildet werden, wie es zuvor für die erfindungsgemäße Plattensäge und deren Spannbacken, Vorschubschlitten und Maschinensteuerung erläutert wurde.

Bevorzugte Ausführungsformen werden anhand der beiliegenden Figuren beschrieben. Es zeigen:
Fig. 1 eine Draufsicht auf eine erste Ausführungsform einer erfindungsgemäßen Plattensäge umfassend einen Fixiertisch mit Vorschubschlitten in einer ersten Position,
Fig. 2 eine Draufsicht gemäß Fig. 1 mit den Vorschubschlitten in einer zweiten Position,
Fig. 3 eine Seitenansicht des Fixiertisches der Plattensäge gemäß Fig. 1,
Fig. 4 einen Ausschnitt aus Fig. 3,
Fig. 5 eine perspektivische Ansicht der oberen Bauelemente eines Vakuumspannelementes,
Fig. 6 ein Detail einer teilgeschnittenen Seitenansicht, darstellend ein Vakuumspannelement und eine Spannbacke,
Fig. 7 ein Detail einer teilgeschnittenen Seitenansicht gemäß Fig. 6 in einer anderen Schnittebene,
Fig. 8 eine perspektivische Ansicht von schräg vorne oben einer zweiten Ausführungsform der Erfindung, und
Fig. 9 eine perspektivische Ansicht von schräg hinten oben der Ausführungsform gemäß Fig. 8.

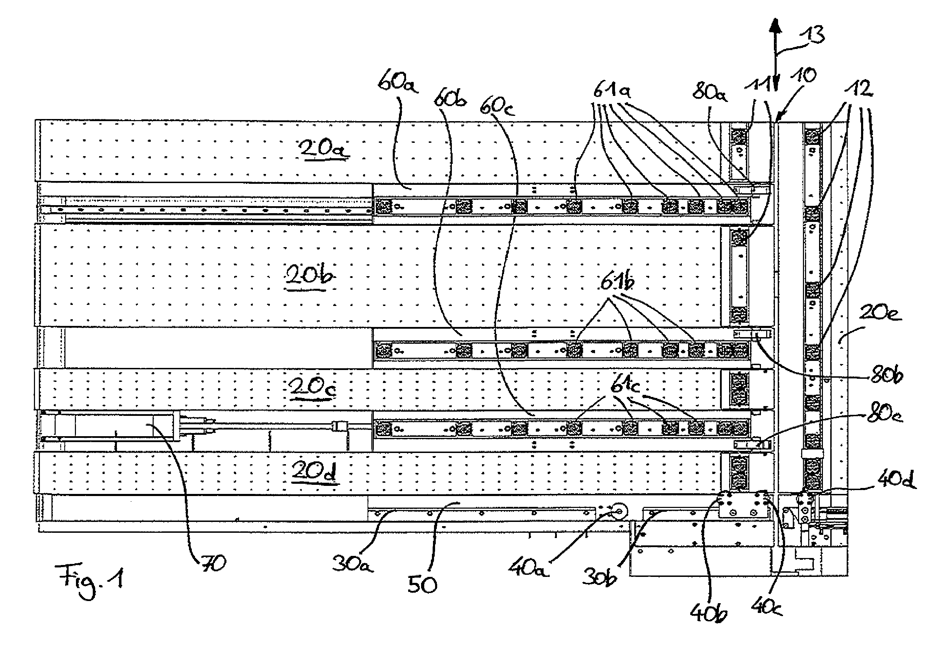

Wie aus Fig. 1 zu erkennen, umfasst eine erfindungsgemäße Plattensäge einen Sägeschlitz 10, unterhalb dessen ein Sägeaggregat (nicht dargestellt) entlang des Sägeschlitzes in der mit Richtungspfeil 13 gekennzeichneten Richtung verfahren werden kann, wobei es typischerweise bei der Verfahrbewegung in einer ersten Richtung mit einem Abschnitt des Umfangs des Kreissägeblatts nach oben aus dem Sägeschlitz herausragt, um den Schnitt durchzuführen und bei der Rückhubbewegung in der hierzu entgegengesetzten Richtung vollständig unterhalb des Sägeschlitzes angeordnet ist. Im Bereich des Sägeschlitzes 10 sind mehrere Sensoren (nicht dargestellt) angeordnet, die das Vorhandensein eines Werkstücks oberhalb des Sägeschlitzes erfassen.

Neben dem Sägeschlitz ist ein Fixiertisch angeordnet. Eine Werkstückauflagefläche wird durch mehrere Luftkissenfelder 20a-e gebildet. Die Luftkissenfelder 20a-d sind am Fixiertisch angeordnet, das Luftkissenfeld 20e am Sägeschlitz. Die Luftkissenfelder sind mit einer Vielzahl von Bohrungen versehen, durch die Luft nach oben austreten kann, um hierdurch ein auf den Luftkissentiscilfeldern abgelegtes Werkstück leicht anzuheben und hierdurch für eine exakte Positionierung leicht verschieblich zu halten.

Im vorderen Bereich links vom Sägeschnitt ist seitlich an der Werkstückauflagefläche 20a-e eine Anschlagleiste 30a, b angeordnet, welche als Referenzfläche zum Anlegen eines Werkstücks dient. Die Anschlagleiste 30a, b liegt oberhalb der Werkstückauflagefläche und senkrecht zum Sägeschlitz 10.

Zum Spannen des zu schneidenden Werkstücks sind entlang der Anschlagleiste durch hier beispielsweise insgesamt vier tellerförmige Spannelemente vorgesehen. Ein Einzelspanner 40a ist zwischen zwei Anschlagleistenabschnitten 30a und 30b der Anschlagleiste angeordnet. Zwei als Doppelspanner 40b, c ausgeführte Spannelemente sind unmittelbar links von dem Sägeschlitz 10 angeordnet und ein einzelnes Spannelement 40d ist rechts vom Sägeschlitz 10 angeordnet und liegt in einer Linie mit den Spannelementen 40b, c. Die Spannelemente 40a-c sind gemeinsam mit der Anschlagleiste 30a,b an einem Fixierschlitten 50 montiert und in einer in der Ebene der Werkstückauflagefläche liegenden Richtung, die senkrecht zum Sägeschlitz 10 liegt, verfahrbar. Das Spannelement 40d ist ortsfest und dient dazu, den nach dem Schnitt entstehenden Anteil eines Werkstücks zu halten.

Parallel und gemeinsam mit dem Fixierschlitten verfahrbar sind drei Vorschubschlitten 60a, b, c in der Werkstückauflagefläche der Plattensäge angeordnet. Die Vorschubschlitten 60a-c liegen ebenfalls senkrecht zum Sägeschlitz 10 und sind mittels eines unterhalb der Werkstückauflagefläche 20a-e liegenden Rahmen (nicht dargestellt) miteinander und mit dem Fixierschlitten 50 gekoppelt, um eine gemeinsame Bewegung auszuführen. Zu dieser Bewegung ist ein Linearaktuator 70 mit dem Rahmen im Bereich des Vorschubschlittens 60a, der dem Fixierschlitten 50 am nächsten liegt, gekoppelt.

Die Oberfläche jedes Vorschubschlittens liegt fluchtend zur Werkstückauflage. Jeder Vorschubschlitten trägt in diesem Ausführungsbeispiel insgesamt neun Vakuumspannelemente 61a-c, die dazu dienen, ein Werkstück, welches auf dem Vorschubschlitten aufliegt, mittels Vakuum zu spannen.

Des Weiteren sind, in der Ebene der Werkstückauflagefiäche, mehrere Vakuumspannelemente 11 entlang einer Linie, die links vom Sägeschlitz liegt und nochmals mehrere Vakuumspannelemente 12 entlang einer Linie, die rechts vom Sägeschlitz liegt, angeordnet. Diese Vakuumspannelemente dienen dazu, das Werkstück während des Sägeschnittes sicher zu fixieren. Die Vakuumspannelemente 12 dienen darüber hinaus dazu, das nach dem Sägeschnitt abgetrennte Werkstückteil zu halten.

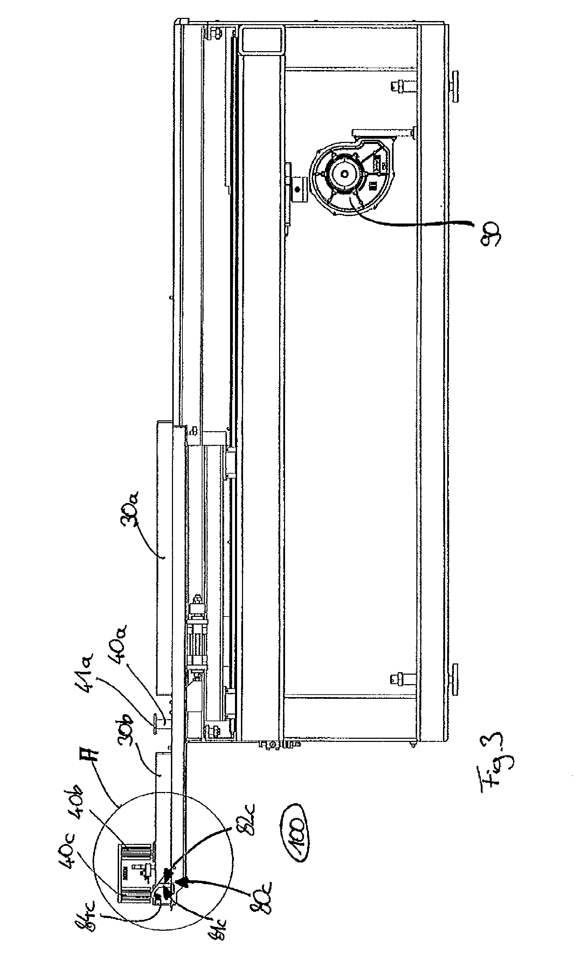

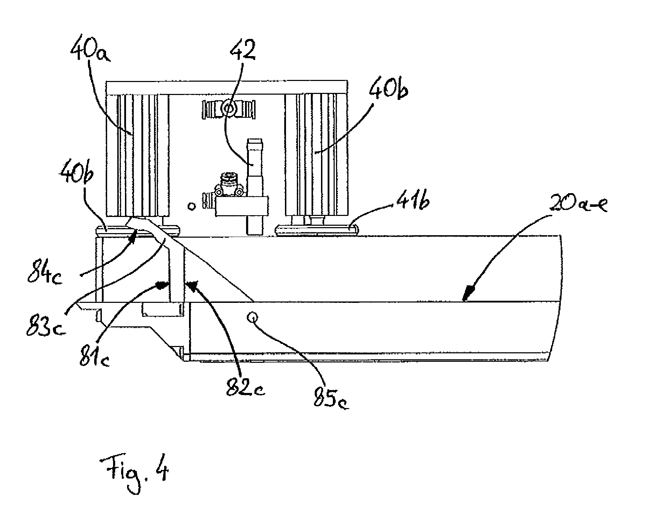

An dem zum Sägeschlitz weisenden Ende der Vorschubschlitten 60a-c ist jeweils eine Spannbacke 80a-c angeordnet. Jede Spannbacke 80a-c kann in eine oberhalb der Werkstückauflagefläche liegende obere Position verschwenkt werden, die in den Figuren 3 und 4 dargestellt ist. Eine Spannbacke 80a-c ist solcherart ausgebildet, dass sie ein auf der zum Sägeschlitz weisenden Seite der Spannbacke liegendes Werkstück spannen kann und zugleich eine definierte Anschlagfläche 81c für dieses Werkstück bereitstellt. Weiterhin ist auf der vom Sägeschlitz wegweisenden Seite der Spannbacke eine zweite Anschlagfläche 82c für ein Werkstück an der Spannbacke ausgebildet, an der ein Werkstück eingelegt werden kann, das auf dieser Seite der Spannbacke liegt.

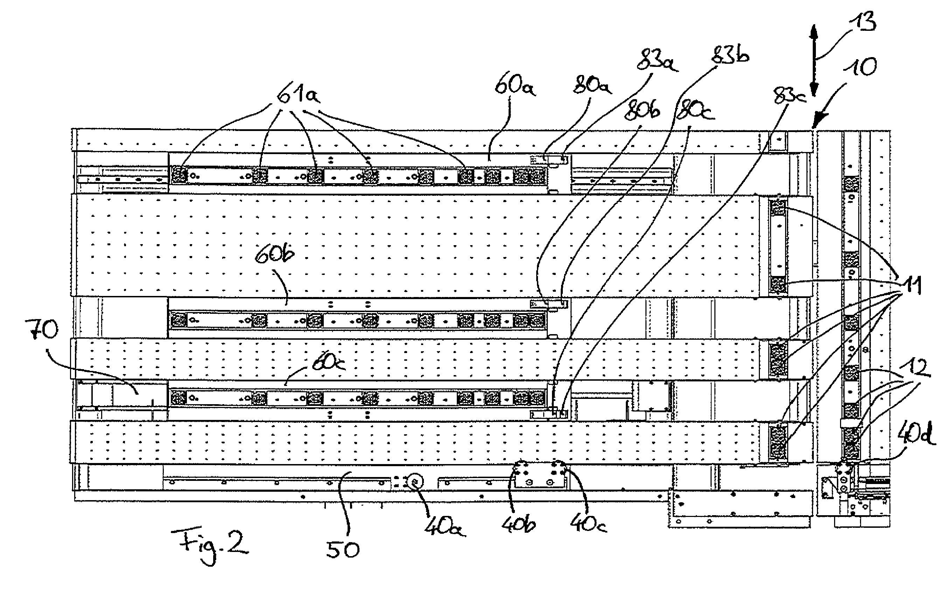

Während Fig. 1 die Plattensäge mit Vorschubschlitten in einer Verfahrposition zeigt, die maximal an den Sägeschlitz 10 herangefahren ist, sind die Vorschubschlitten 60a-c in Fig. 2 maximal vom Sägeschlitz weg, also in der Figur nach links verfahren. Man erkennt im Abgleich von Fig. 1 und 2, dass die Vorschubschlitten 60a-c und der Fixierschlitten 50 mit seinen Spannelementen 40a-c und der Anschlagleiste 30a, b gemeinsam verfahren werden und hierdurch es ermöglichen, ein an der Anschlagleiste 30a, b anliegendes Werkstück und mittels der Spannelemente 30a-c sowie der Vakuumspannelemente 61a-c gespanntes Werkstück sicher zu verschieben, ohne dass dieses Werkstück aus seiner definierten Positionierung an der Anschlagleiste 30a, b sich herausbewegt.

Man erkennt weiterhin, dass die links und rechts vom Sägeschlitz 10 liegenden Vakuumspannelemente 11, 12 nicht gemeinsam mit den Vorschubschlitten und dem Fixierschlitten verfahren werden. Diese Vakuumspannelemente dienen lediglich dazu, das Werkstück während der Durchführung des Sägeschnittes zu fixieren, um einen sauberen Schnitt zu gewährleisten und den hiernach abgetrennt auf der rechten Seite vom Sägeschlitz 10 liegenden abgetrennten Werkstückabschnitt zu halten.

Fig. 3 zeigt eine Seitenansicht des Fixiertisches. In Fig. 3 ist die Baueinheit, welche das Kreissägemodul, den Sägeschlitz 10, die Spannelemente 11, 12 und das Luftkissenfeld 20e aufnimmt, weggelassen. Dieses Bauelement würde an der mit 100 bezeichneten Position angeordnet und mit dem Fixiertisch verbunden werden.

Fig. 3 zeigt den Fixiertisch mit den Vorschubschlitten 60a-c in einer maximal nach rechts in Richtung auf den Sägeschlitz verfahrenen Position. Man erkennt die Anschlagleiste 30a, b und die in Doppelanordnung angeordneten Spannelemente 40b, c sowie eine vor den Spannelementen angeordnete Spannbacke 80c in einer oberhalb der Werkstückauflagefläche liegenden, ausgefahrenen Position, Weiterhin ist unterhalb der Werkstückauflagefläche ein Gebläse 90 angeordnet, welches dazu dient, die Öffnungen in den Luftkissentischabschnitten 20a-d mit Luft zu beaufschlagen.

Fig. 4 zeigt den in Fig. 3 mit einem Kreis umrandeten Ausschnitt in größerem Detail. Wie man erkennen kann, weist jedes Spannelement 40a-d einen Spannteller 41a-d auf. Die Spannelemente 40a-d sind eingefahren, so dass die Spannteller 41 a-d in ihrer oberen Position liegen und in einem Raum unterhalb der Spannteller 41a-d ein Werkstück angeordnet werden könnte und gegen die Werkstückauflagefläche, die im Wesentlichen durch die Luftkissenfelder 20a-e und die Oberfläche der Vorschubschlitten 60a-c gebildet wird, gepresst werden könnte. Weiterhin ist im Bereich zwischen den Spannelementen 40a, b ein Sensor 42 angeordnet, welcher die Werkstückdicke messen kann, um hierdurch die Vorschubgeschwindigkeit des Sägeaggregats und den Betrag, um welchen das Sägeblatt umfangsweise aus dem Sägeschlitz heraustreten muss, zu ermitteln.

Wie in Fig. 4 gut zu erkennen ist, weist die in der nach oben ausgefahrenen Position gezeigte Spannbacke 80c eine erste Anschlagfläche 81c auf, an der ein Werkstück angelegt und in definierter Position positioniert werden kann, welches auf der zum Sägeschlitz 10 weisenden Seite der Spannbacke 80c liegt. Parallel und beabstandet zu der ersten Anschlagfläche 81 c ist auf der vom Sägeschlitz 10 wegweisenden Seite der Spannbacke eine zweite Anschlagfläche 82c angeordnet. An der Anschlagfläche 82c kann ein Werkstück in definierter Position positioniert werden, welches auf der vom Sägeschlitz wegweisenden Seite der Spannbacke liegt. Schließlich ist, an einem über die erste Anschlagfläche 81c hinausragenden Spannbackenarm 83c eine gerundete Spannfläche 84c angeordnet, welche gegenüberliegend zur Werkstückauflagefläche 20a-e liegt. Die Spannfläche 84c spannt, wenn die Spannbacke 80c um einen Drehpunkt 85c in einer in Fig. 4 entgegen dem Uhrzeigersinn liegenden Richtung verschwenkt wird, ein links von der Spannbacke 80c liegendes Werkstück zwischen der Spannfläche 84c und der Werkstückauflagefläche 20a-e ein.

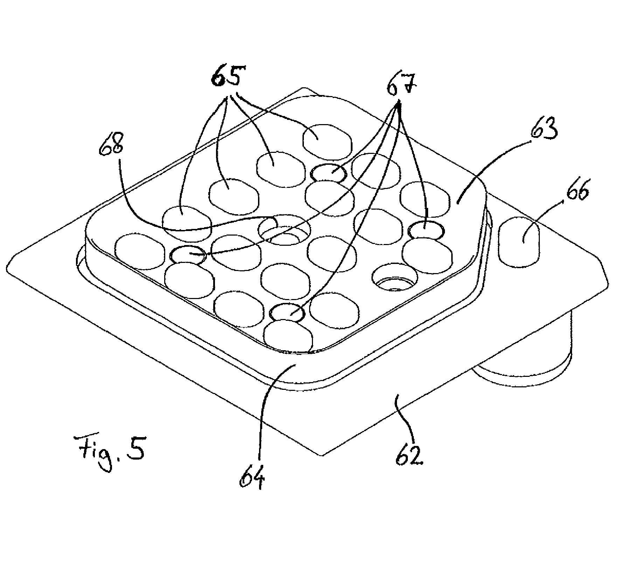

Fig. 5 zeigt in größerem Detail ein Valcuumspannelement 61a-c bzw. 11, 12. Wie man erkennen kann, weist ein solches Vakuumspannelement eine Vakuumplatte 62 auf, innerhalb und oberhalb der eine Gummiplatte 63 mit einem umlaufenden, elastisch verformbaren Rand 64 angeordnet ist. Der umlaufende Rand 64 umschreibt ein innen liegendes Vakuumgebiet, in dem mehrere Felder 65 angeordnet sind, auf denen die untere Oberfläche eines Werkstücks reibschlüssig zu liegen kommt, wenn ein Vakuum in diesem umschriebenen Bereich angelegt wird.

In einem Eckbereich des Vakuumspannelements ist ein Taststift 66 angeordnet, der das Aufliegen eines Werkstücks im Bereich des Vakuumspannelements erfasst und hierdurch ein Ventil betätigt, welches das Anlegen des Vakuums durch mehrere Bohrungen 67 in dem Bereich, der von dem Rand 64 umschrieben wird, bewirkt. Das Vakuumspannelement kann mittels einer zentralen Bohrung 68 am Vorschubschlitten bzw. im Bereich um den Sägeschlitz befestigt werden.

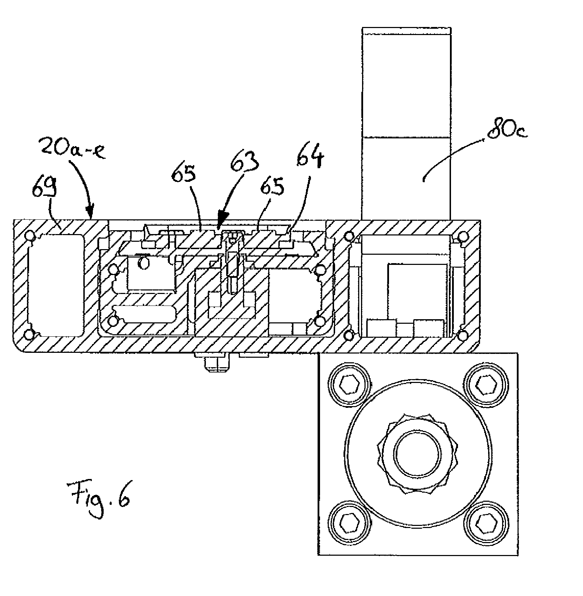

Fig. 6 zeigt eine geschnittene Seitenansicht des Vakuumspannelements gemäß Fig. 5. Man erkennt, dass das gesamte Vakuumspannelement in einen Profilrahmen 69 eingesetzt ist und innerhalb diesem Profilrahmen in vertikaler Richtung verschoben werden kann. Hierdurch ist es möglich, dass sich der umlaufende Rand 64 in eine Position unterhalb der Werkstückauflagefläche verfahren lässt, wenn das Vakuumspannelement nicht zum Spannen eines Werkstücks verwendet wird, um hierdurch eine Beschädigung des Gummirandes 64 des Vakuumspannelementes zu verhindern. Aus dieser abgesenkten Position kann das Vakuumspannelement angehoben werden, wenn ein Vakuum angelegt wird und legt sich hierdurch an die untere Oberfläche des Werkstücks an, um dieses zu spannen.

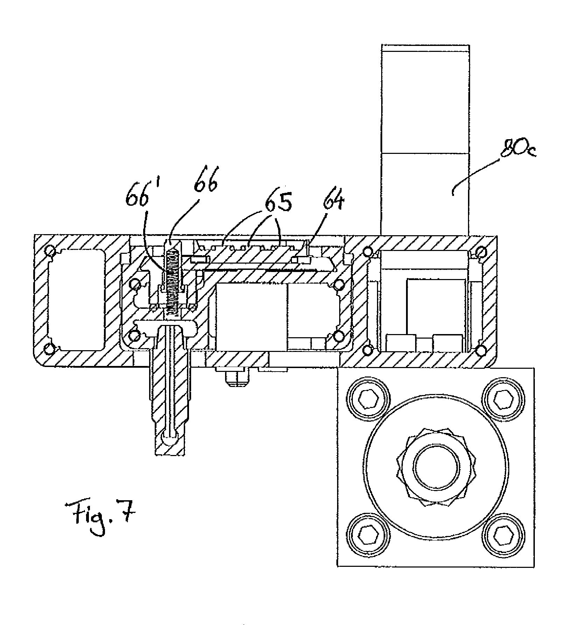

In der in Fig. 7 dargestellten Schnittzeichnung des Vakuumspannelements erkennt man den Taststift 66, der in einer eingedrückten Position gezeigt ist und mittels einer Feder 66' solcherart vorgespannt wird, dass er gegen die untere Oberfläche eines Werkstücks angelegt wird, um hierdurch das Vorhandensein bzw. Nichtvorhandensein eines Werkstücks oberhalb des Vakuumspannelements erfassen zu können.

Mit der erfindungsgemäßen Plattensäge können insbesondere in einfacher Weise Besäumschnitte und Zuschnitte von großformatigen Platten ausgeführt werden. Zur Ausführung eines Besäumschnitts wird ein Werkstück auf die Werkstückauflagefläche aufgelegt und an der Anschlagleiste 30a, b sowie den Anschlagflächen 82a-c positioniert. Das Werkstück wird hiernach mittels der Vakuumspannelemente 61a-c und der Spannelemente 40a-c gespannt und kann mithilfe der Vorschubschlitten und des Fixierschlittens verschoben werden. Wenn die Detektoren im Bereich des Sägeschlitzes das Vorhandensein eines Werkstücks oberhalb des Sägeschlitzes detektieren, fahren die Vorschubschlitten und der Fixierschlitten nach links, detektieren die Sensoren nicht ein solches Werkstück oberhalb des Sägeschlitzes, fahren die Vorschubschlitten und der Fixierschlitten nach rechts. Auf diese Weise kann die Werkstückkante erkannt werden. Sobald die Werkstückkante mittels der Sensoren im Bereich des Sägeschlitzes erkannt ist, fährt der Schlitten noch um ein definiertes Maß nach rechts über den Sägeschnitt hinaus. Die Vakuumspannelemente 11 spannen das Werkstück zusätzlich und der Besäumschnitt wird durch Verfahren des Kreissägemoduls entlang des Sägeschlitzes durchgeführt.

Nachdem ein solcher Besäumschnitt ausgeführt wurde, können nach Lösen der Vakuumspannelemente 11 weitere Formatierungsschnitte durchgeführt werden, indem der Vorschubschlitten und der Fixierschlitten um ein definiertes Schnittmaß nach rechts verschoben wird. In diesem Fall spannen zur Durchführung des Formatierungsschnitts die Spannelemente 11, 12 sowie das Spannelement 40d das Werkstück, um den abzutrennenden Werkstückabschnitt während und nach dem Sägeschnitt ebenfalls sicher zu fixieren.

Für den Fall, dass ein schmales Werkstück geschnitten werden soll, kann dieses Werkstück in definierter Weise an die Anschlagfläche 81a-c der Spannbacken angelegt werden und anschließend mittels der Spannbacken und der daran ausgebildeten Spannflächen 84c gespannt werden und an den Sägeschlitz 10 herangefahren werden, um einen Zuschnitt auszuführen.

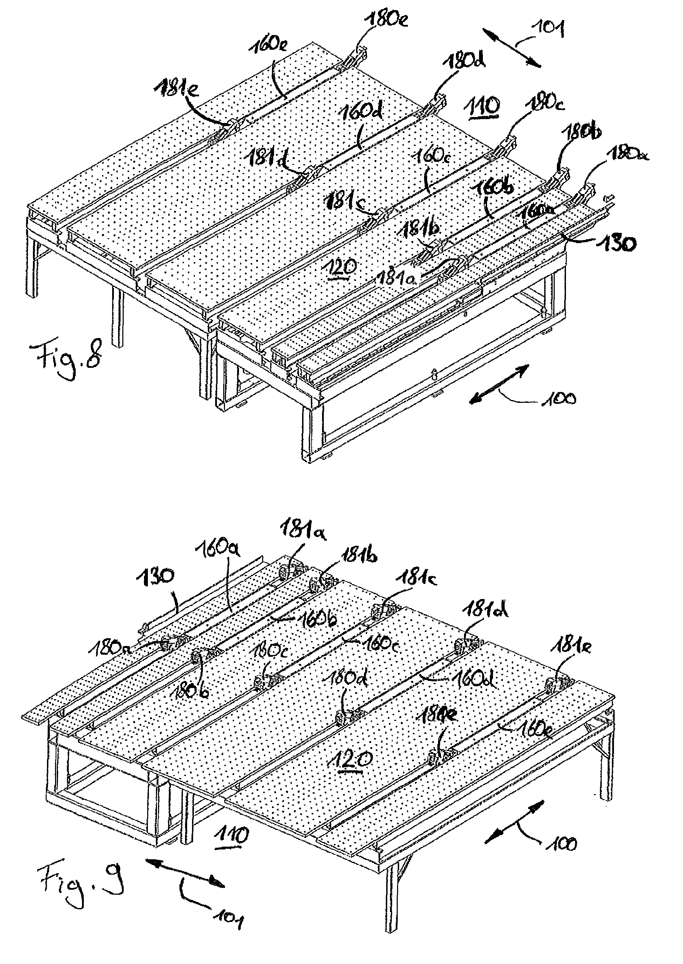

Fig. 8 und 9 zeigen eine zweite Ausführungsform der Erfindung. Diese Ausführungsform umfasst insgesamt fünf Vorschubschlitten 160 a-e, die ebenfalls parallel zueinander in eine Werkstückauflagefläche 120 eingesenkt sind. Der Vorschubschlitten 160 a liegt benachbart und parallel zu einer Anschlagschiene 130 in einem kurzen Abstand zu dieser Anschlagschiene. Der Vorschubschlitten 160 b liegt in einem ebenso kurzen Abstand benachbart zu dem Vorschubschlitten 160 a. Der Abstand des Vorschubschlittens 160 c zum Vorschubschlitten 160 b ist größer als der Abstand zwischen dem Vorschubschlitten 160 b und a. Der Abstand des Vorschubschlittens 160 d ist wiederum größer als der Abstand zwischen den Vorschubschlitten 160 b und c und der Abstand zwischen Vorschubschlitten 160 d und e ist wiederum größer als der Abstand zwischen dem Vorschubschlitten 160 c und d. Auf diese Weise wird der Abstand zwischen den Vorschubschlitten 160 a-e kontinuierlich ausgehend von der Anschlagschiene 130 erhöht. Hierdurch ist es möglich, dass sowohl kleine als auch große Werkstücke zumindest zwei Vorschubschlitten überdecken und auf diese Weise eine sichere Fixierung erzielt wird.

Jeder Vorschubschlitten 160 a-e ist entlang einer Richtung 100 verschieblich gelagert und es ist zu verstehen, dass diese Verschiebebewegung der Vorschubschlitten 160 a-c senkrecht zu der Ausrichtung 101 eines Sägeschlitzes, entlang dessen sich ein Sägeblatt bewegt, verläuft. Das Sägeblatt und der hierfür vorgesehene Sägeschlitz sind in den Figuren 8 und 9 nicht abgebildet und würden in dem mit Bezugszeichen 110 bezeichneten Bereich liegen.

Jeder Vorschubschütten 160 a-e weist an seinem zum Sägeschlitz weisenden Ende eine erste Spannbacke 180 a-e auf, die solcher Art ausgebildet ist, dass sie in einer abgesenkten Position unterhalb der Werkstückauflagefläche 120 liegt und in einer angehobenen Position über diese hinausragt. An jeder Spannbacke 180 a-e ist eine Spannfläche ausgebildet, die zur Werkstückauflagefläche weist und so angeordnet ist, dass sie ein auf der Werkstückauflagefläche aufliegendes Werkstück gegen eine am Vorschubschlitten ausgebildete Gegenfläche spannen kann. Auf diese Weise ist es möglich, mit einer oder mehreren Spannbacken 180 a-e ein Werkstück zu spannen und durch eine Vorschubbewegung der Vorschubschlitten auf den Sägeschlitz 110 zuzubewegen oder von diesem wegzubewegen.

Weiterhin ist an jedem Vorschubschlitten zusätzlich jeweils eine Spannbacke 181 a-e angeordnet, die an dem entgegengesetzten, vom Sägeschlitz 110 wegweisenden Ende des Vorschubschlittens platziert ist. Die Spannbacken 181 a-e sind konstruktiv übereinstimmend ausgeführt wie die Spannbacken 180 a-e. Die Spannbacken 181 a-e dienen dazu, größere Werkstücke zu spannen, welche die gesamte Werkstückauflagefläche oder einen großen Teil davon einnehmen und die insbesondere so zugeschnitten werden sollen, dass sie so aufgelegt sind, dass sie sich in der Richtung 100 weit erstrecken. Durch die Bereitstellung von jeweils zwei Spannbacken an jedem Vorschubschlitten am vorderen und hinteren Ende des Vorschubschlittens wird es somit ermöglicht, mit dem Vorschubschlitten und den daran angeordneten Spannbacken sowohl sehr schmale Werkstücke als auch sehr große Werkstücke zu spannen und mit der erfindungsgemäßen Plattensäge zuzuschneiden. Hierfür ist es nicht erforderlich, dass sich die Vorschubschlitten seitlich über die Werkstückauflagefläche hinaus verschieben lassen.

Dabei ist grundsätzlich zu verstehen, dass dann, wenn mit den hinteren Spannbacken 181 a-e ein Werkstück gespannt wird, die vorderen Spannbacken 180 a-e in ihrer unter die Werkstückauflagefläche abgesenkten Position sind und von dem zu bearbeitenden Werkstück verdeckt werden.

Grundsätzlich ist zu verstehen, dass ein Werkstück vorzugsweise durch zumindest zwei Spannbacken gespannt wird, wobei in Ausnahmefällen ein Werkstück auch durch eine einzelne Spannbacke sicher gespannt und dann bearbeitet werden kann. Erfindungsgemäß ist vorgesehen, dass ein Werkstück in Abhängigkeit seiner Abmessungen jeweils durch all diejenigen Spannbacken gespannt wird, welche seiner Tiefe senkrecht zur Erstreckungsrichtung der Anschlagschiene entsprechen und von dem Werkstück erreicht werden.

## Patentansprüche

1. Plattensäge, umfassend
- Eine Werkstückauflagefläche (20a-e) mit einem darin angeordneten Sägeschlitz (10)
- Ein Sägeaggregat, welches entlang des Sägeschlitzes horizontal verfahrbar ist und ein drehbar gelagertes Kreissägeblatt umfasst, dessen Drehachse unterhalb der Werkstückauflagefläche angeordnet ist,
- zumindest ein Werkstückspannelement (80a-c), das an einen Vorschubschlitten (60a-c) angeordnet ist, der in der Ebene der Werkstückauflagefläche verschiebbar ist, vorzugsweise in einer Richtung verfahrbar ist, die senkrecht zum Sägeschlitz liegt,
**dadurch gekennzeichnet, dass** das Werkstückspannelement eine bewegliche Spannbacke (80a-c) aufweist,
- die in einer ersten Position unterhalb der Werkstückauflagefläche angeordnet ist,
- in einer zweiten Position über die Werkstückauflagefläche hinausragt,
- an der eine Fläche (81c) so ausgebildet ist, dass sie in der zweiten Position als erste Anschlagfläche (81c) für ein Werkstück dient, das aus einer ersten Richtung, welche parallel zur Werkstückauflagefläche ausgerichtet ist, gegen die Spannbacke geschoben wird, und
- die so mit einem Aktuator gekoppelt ist, dass der Aktuator auf die Spannbacke eine Kraft ausübt, welche die Spannbacke aus der zweiten in Richtung zu der ersten Position bewegt und hierbei ein Werkstück durch eine an der Spannbacke ausgebildete Spannfläche in Richtung der Werkstückauflagefläche, insbesondere gegen die Werkstückauflagefläche spannt.

2. Plattensäge nach Anspruch 1,
**dadurch gekennzeichnet, dass** an der Spannbacke eine zweite Fläche (83c) ausgebildet ist, welche als Spannfläche (83c) für ein Werkstück dient und solcherart an der Spannbacke angeordnet ist, dass ein Werkstück zwischen der Spannfläche und der Werkstückauflagefläche eingespannt werden kann, wenn der Aktuator die Spannbacke aus der zweiten Position in Richtung der ersten Position bewegt.

3. Plattensäge nach Anspruch 1 oder 2,
**dadurch gekennzeichnet, dass** an der Spannbacke eine dritte Fläche (82c) so angeordnet ist, dass sie als zweite Anschlagfläche (82c) für ein Werkstück dient, das aus einer zweiten Richtung gegen die Spannbacke geschoben wird, welche parallel zur Werkstückauflagefläche und vorzugsweise um 180° gegenüber der ersten Richtung geschwenkt ausgerichtet ist und dass vorzugsweise die erste Anschlagfläche (81 c) parallel und beabstandet zur zweiten Anschlagfläche (82c) liegt.

4. Plattensäge nach einem der vorhergehenden Ansprüche,
**dadurch gekennzeichnet, dass** an dem Vorschubschlitten (60a-c) zumindest ein, vorzugsweise mehrere Vakuumspannelemente (61a-c) angeordnet sind, welche so angeordnet sind, dass sie ein auf der Werkstückauflagefläche aufliegendes Werkstück spannen können.

5. Plattensäge nach einem der vorhergehenden Ansprüche,
**gekennzeichnet durch** mehrere Vorschubschlitten (60a-c), die jeweils eine Spannbacke (80a-c) aufweisen und unabhängig voneinander verfahrbar sind.

6. Plattensäge nach einem der vorhergehenden Ansprüche 1-3,
**gekennzeichnet durch** mehrere Vorschubschlitten (60a-c), die jeweils zumindest eine Spannbacke (80a-c) aufweisen, insbesondere eine Spannbacke in ihrem vorderen, zum Sägeschlitz weisenden Endbereich und/oder in ihrem hinteren, vom Sägeschlitz wegweisenden Endbereich, wobei die Vorschubschlitten vorzugsweise solcherart miteinander gekoppelt sind, dass sie gemeinsam verfahrbar sind.

7. Plattensäge nach einem der vorhergehenden Ansprüche 5 oder 6,
**dadurch gekennzeichnet, dass** die Vorschubschlitten (60a-c) parallel und beabstandet zueinander liegen.

8. Plattensäge nach einem der vorhergehenden Ansprüche,
**dadurch gekennzeichnet, dass** eine, vorzugsweise alle Spannbacken gegen eine Fläche spannen, die an dem jeweiligen Vorschubschlitten, an dem die Spannbacke angeordnet ist, ausgebildet ist.

9. Plattensäge nach einem der vorhergehenden Ansprüche,
**dadurch gekennzeichnet, dass**
- der/die Vorschubschlitten mit zumindest einem Schlittenaktuator zur Bewegung des/der Vorschubschlitten (s) gekoppelt ist/sind,
- die Spannbacken mit zumindest einem Backenaktuator zur Bewegung des/der Spannbacke(n) gekoppelt ist/sind, und
**gekennzeichnet durch**
- einen Sensor im Bereich des Sägeschlitzes, der ausgebildet ist, um das Vorhandensein eines Werkstücks in einem Bereich oberhalb des Sägeschlitzes zu detektieren, und
- eine Maschinensteuerung, die mit dem Sägeaggregat, dem Schlittenaktuator, dem Backenaktuator und dem Sensor signaltechnisch gekoppelt ist und die ausgebildet ist, um
o den Backenaktuator zum Spannen eines Werkstücks anzusteuern,
○ den/die Vorschubschlitten bei gespanntem Werkstück solange in Richtung auf den Sägeschlitz zuzubewegen, bis der Sensor das Vorhandensein des Werkstücks im Bereich oberhalb des Sägeschlitzes, detektiert, und
○ hierauf folgend das Sägeaggregat zur Durchführung eines Besäumschnittes anzusteuern.

10. Plattensäge nach dem vorhergehenden Anspruch,
○ **dadurch gekennzeichnet, dass** die Maschinensteuerung ausgebildet ist, um den/die Vorschubschlitten bei gespanntem Werkstück nachdem der Sensor das Vorhandensein des Werkstücks im Bereich oberhalb des Sägeschlitzes detektiert hat, um eine vorbestimmte, vorzugsweise über eine Benutzerschnittstelle eingebbare Distanz in Richtung auf den Sägeschlitz zuzubewegen und hierauf folgend das Sägeaggregat zur Durchführung des Besäumschnittes anzusteuern.

11. Plattensäge nach dem vorhergehenden Anspruch 9 oder 10,
**dadurch gekennzeichnet, dass** die Maschinensteuerung ausgebildet ist, um
- den Backenaktuator zum Spannen eines Werkstücks anzusteuern, den/die Vorschubschlitten bei gespanntem Werkstück solange in Richtung von dem Sägeschlitz wegzubewegen, solange der Sensor das Vorhandensein des Werkstücks im Bereich oberhalb des Sägeschlitzes detektiert,
- hierauf folgend vorzugsweise den Vorschubschlitten bei gespanntem Werkstück solange in Richtung auf den Sägeschlitz zuzubewegen, bis der Sensor das Vorhandensein des Werkstücks im Bereich oberhalb des Sägeschlitzes detektiert,
- hierauf folgend den Vorschubschlitten bei gespanntem Werkstück nachdem der Sensor das Vorhandensein des Werkstücks im Bereich oberhalb des Sägeschlitzes detektiert hat, um eine vorbestimmte, vorzugsweise über eine Benutzerschnittstelle eingebbare Distanz in Richtung auf den Sägeschlitz zuzubewegen, und.
- hierauf folgend das Sägeaggregat zur Durchführung eines Besäumschnittes anzusteuern.

12. Plattensäge nach dem vorhergehenden Anspruch 9 oder 10,
**dadurch gekennzeichnet, dass** die Maschinensteuerung ausgebildet ist, um
- den Backenaktuator zum Spannen eines Werkstücks anzusteuern, den Vorschubschlitten bei gespanntem Werkstück solange in Richtung von dem Sägeschlitz wegzubewegen, solange der Sensor das Vorhandensein des Werkstücks im Bereich oberhalb des Sägeschlitzes, detektiert,
- hierauf folgend den/die Vorschubschlitten bei gespanntem Werkstück nachdem der Sensor das Vorhandensein des Werkstücks im Bereich oberhalb des Sägeschlitzes nicht mehr detektiert hat, um eine vorbestimmte, vorzugsweise über eine Benutzerschnittstelle eingebbare Distanz in Richtung auf den Sägeschlitz zuzubewegen, und
- hierauf folgend das Sägeaggregat zur Durchführung eines Besäumschnittes anzusteuern.

13. Plattensäge nach einem der vorhergehenden Ansprüche,
**dadurch gekennzeichnet, dass**
- der/die Vorschubschlitten mit zumindest einem Schlittenaktuator zur Bewegung des/der Vorschubschlitten (s) gekoppelt ist/sind,
- die Spannbacken mit zumindest einem Backenaktuator zur Bewegung des/der Spannbacke(n) gekoppelt ist/sind, und
**gekennzeichnet durch**
- eine Maschinensteuerung, die mit dem Schlittenaktuator, dem Backenaktuator und dem Sensor signaltechnisch gekoppelt ist und die ausgebildet ist, um
a) den Backenaktuator zum Spannen eines Werkstücks anzusteuern,
b) den/die Vorschubschlitten bei gespanntem Werkstück um ein über eine Benutzerschnittstelle eingebbares Schnittmaß zu bewegen,
c) hierauf folgend das Sägeaggregat zur Durchführung eines Formatierungsschnittes anzusteuern, und
d) hierauf folgend die Schritte b) und c) gegebenfalls zu wiederholen, wobei der Vorschubschlitten um das gleiche oder um ein anderes Schnittmaß bewegt wird.

14. Fixiertisch für eine Plattensäge nach einem der vorhergehenden Ansprüche, mit
a. einer Werkstückauflagefläche,
b. Kopplungsmitteln zum Befestigen des Fixiertisches an einer Plattensäge solcherart, dass die Werkstückauflagefläche des Fixiertisches fluchtend zu einer Werkstückauflagefläche der Plattensäge liegt,
c. zumindest einem Werkstückspannelement, das an einen Vorschubschlitten angeordnet ist, der in der Ebene der Werkstückauflagefläche verschiebbar ist,
**dadurch gekennzeichnet, dass** das Werkstückspannelement als Spannbacke ausgeführt ist, die eine bewegliche Spannbacke aufweist,
- die in einer ersten Position unterhalb der Werkstückauflagefläche angeordnet ist,
- in einer zweiten Position über die Werkstückauflagefläche hinausragt,
- an der eine Fläche so ausgebildet ist, dass sie in der zweiten Position als erste Anschlagfläche für ein Werkstück dient, das aus einer ersten Richtung, welche parallel zur Wericstückaufiageffäche ausgerichtet ist, gegen die Spannbacke geschoben wird, und
- die so mit einem Aktuator gekoppelt ist, dass der Aktuator auf die Spannbacke eine Kraft ausübt, welche die Spannbacke aus der zweiten in Richtung zu der ersten Position bewegt und hierbei ein Werkstück durch die Spannbacke spannt.

15. Fixiertisch nach Anspruch 14,
**gekennzeichnet durch** eines oder mehrere der Fortbildungsmerkmale der Ansprüche 2-13.
